# EUROPÄISCHE PATENTANMELDUNG

(11) **EP 0 104 401 A2**
(43) Veröffentlichungstag der Anmeldung: **04.04.1984**
(21) Anmeldenummer: 83108103.9
(22) Anmeldetag: 17.08.1983
(51) Int. Cl.: G01S 13/87, G01S 13/04

(54) **Verfahren zum Erhöhen der Sicherheit eines Zugangskontrollsystems**

(30) Priorität: 01.09.1982 DE 3232437
(71) Anmelder: BROWN, BOVERI & CIE Aktiengesellschaft, D-68309 Mannheim (DE)
(72) Erfinder: Berthold, Rainer, Dipl.-Phys, D-6901 Gaiberg (DE); Strietzel, Rainer, D-6900 Heidelberg (DE)
(74) Vertreter: Kempe, Wolfgang (DE)

(57) **Zusammenfassung**

In einem Zugangskontrollsystem wird die Berechtigung, ein bestimmtes Gebiet betreten zu dürfen, mit Hilfe einer Einrichtung zur automatischen Identifizierung von Objekten und/oder Lebewesen (10, 11, 12) in der Art kontrolliert, daß von einem ortsfesten Abfragegerät (20), welches einen Energiesender, einen Codesender, einen Datenempfänger und eine Auswerteeinheit enthält, über einen Mikrowellen-Energiestrahl die an den zu kontrollierenden Obejekten und/oder Lebewesen (10, 11) befestigten Antwortgeräte, welche einen Energieempfänger und -wandler, einen Codeempfänger, einen Codevergleicher, einen Kennzeichen- speicher und einen Datensender enthalten, angesprochen und erfaßt werden, wobei die Datensender nach einer Überprüfung des vom Codesender kommenden Codes das im Kennzeichenspeicher gespeicherte Kennzeichen aussenden. Zusätzlich wird die Änderung des Strahlungsflusses der vom Hintergrund der Kontrollzone (14) und von den Objekten und/oder Lebewesen (10, 11) reflektierten bzw. absorbierten Mikrowellen-Energiestrahlung (9) erfaßt. Aus der Größe dieser Änderung wird die Anzahl der Objekte und/oder Lebewesen ermittelt. Diese Anzahl wird mit der Zahl der vom ortsfesten Abfragegerät (20) identifizierten Antwortgeräte verglichen. Auf diese Weise wird verhindert, daß Objekte und/oder Lebewesen, die nicht mit einem Antwortgerät ausgerüstet sind, unter dem Schutz einer größeren Menge von Objekten und/oder Lebewesen, die mit einem Antwortgerät ausgerüstet sind, unerkannt das kontrollierte Gebiet betreten können.

## Beschreibung

Die Erfindung bezieht sich auf ein Verfahren zum Erhöhen der Sicherheit eines Zugangskontrollsvstems, gemäß dem Oberbegriff des Patentanspruches 1.

Eine derartige Einrichtung zur automatischen Identifizierung von Objekten und/oder Lebewesen ist in der DE-OS 29 19 753 beschrieben. Es handelt sich dabei um eine Anlage, die aus einem ortsfesten Abfragegerät und einem beweglichen Antwortgerät besteht.

Das Abfragegerät besitzt einen Energiesender und einen Öffnungscode-Sender, der den in einem Öffnungscode-Speicher und gegebenenfalls einem Öffnungscode-Zusatzspeicher gespeicherten Öffnungscode aussendet, sowie einen Kennzeichenem^{p}fänger und eine Datenverarbeitungseinheit. Das Antwortgerät enthält einen Energieempfänger, der die eingestrahlte Energie in Gleichstrom für die Elektronik des Antwortgerätes umwandelt. Ferner enthält das Antwortgerät einen Öffnungscode-Empfänger mit nachgeordnetem ö_{f}fnungscode-Vergleicher, der den in einem Öffnungscode-Speicher und gegebenenfalls Öffnungscode-Zusatzspeicher gespeicherten Code mit dem über den Funkweg empfangenen Code vergleicht. Das Ausgangssignal des Öffnungscode-Vergleichers steuert über einen Öffnungscode=Verarbeiter einen Kennzeichen-Sender. Das vom Kennzeichen-Senäer zum Äbfragegerät auszusendende Kennzeichen ist in einem Kennzeichen-Speicher und gegebenenfalls in einem oder mehreren Kennzeichen-Zusatzspeichern gespeichert. Mit Hilfe eines zusätzlichen Kennzeichen-Codierempfängers im Antwortgerät kann der im Kennzeichen-Zusatzspeicher gespeicherte Kennzeichenteil beliebig über Funk geändert werden. Da die eingestrahlte Energie naturgemäß klein ist, der Kennzeichen-Sender jedoch ein möglichst energiereiches Antwortsignal abstrahlen soll, um eine hohe Reichweite zu erzielen, kann der vom Kennzeichen-Sender auszustrahlende Signalträger im ortsfesten Abfragegerät erzeugt und mit dem Energiestrahl und dem Öffnungscode an das bewegliche Antwortgerät übertragen werden, wo der Antwortsignalträger vor seiner Wiederabstrahlung durch den Kennzeichen-Sender lediglich moduliert wird.

Unter Verwendung dieser bekannten Einrichtung zur automatischen Identifizierung von Objekten und/oder Lebewesen ist es mit Hilfe des in der DE-OS 29 46 Q42 beschriebenen Verfahrens möglich, die Kennzeichen einer unbestimmten Anzahl von Antwortgeräten, die sich gleichzeitig im Energiefeld des Abfragegerätes befinden, berührungsfrei zu ermitteln. Wird ein derartiges System zur Objekt- bzw. Personenidentifizierung als Zugangskontrollsystem eingesetzt, so besteht die Möglichkeit, daß Objekte und/oder Lebewesen, die nicht mit einem derartigen Antwortgerät ausgerüstet sind, unter dem Schutz einer größeren Menge von Objekten und/oder Lebewesen in das kontrollierte Gebiet eindringen können. Es ist deshalb erforderlich, die Anzahl der Objekte und/oder Lebewesen unabhängig von der Anzahl der Antwortgeräte zu ermitteln und diese beiden Zahlen miteinander zu vergleichen, um bei fehlender Übereinstimmung Alarm auslösen oder andere Gegenmaßnahmen ergreifen zu können. Da hierdurch die Vorteile der berührungslosen Abfrage der Antwortgeräte und der damit verbundene schnelle und reibungslose Ablauf des Objekt- bzw. Personenverkehrs nicht behindert werden sollen, scheiden solche Verfahren, bei denen die Objekte und/oder Lebewesen mit Hilfe von Drehtüren, Schleusen usw. vereinzelt werden müssen, von vornherein aus.

Der Erfindung liegt die Aufgabe zugrunde ein Verfahren anzugeben, mit dem die Anzahl aller Objekte und/ oder Lebewesen in einer Kontrollzone erfaßt und gleichzeitig die Anzahl der sich hier in erlaubter oder unerlaubter Weise aufhaltenden Objekte: und/oder Lebewesen so ermittelt werden kann, daß eine Beeinträchtigung des schnellen und reibungslosen Verkehrs in der Kontrollzone vermieden wird.

Diese Aufgabe wird erfindungsgemäß durch die kennzeichnenden Merkmale des Patentanspruches 1 gelöst.

Bei der vorliegenden Erfindung werden die von den zu ortenden Objekten und/oder Lebewesen reflektierten bzw. absorbierten Mikrowellen empfangen und ausgewertet. Im Gegensatz zu dem bekannten Radar-Verfahren wird jedoch nicht die Laufzeit der elektromagnetischen Welle von der Sendeantenne zum Objekt und wieder zurück ausgewertet, sondern vielmehr die charakteristischen Reflexions- bzw. Absorptionseigenschaften der Oberfläche der Objekte und/oder Lebewesen. Die Erfindung macht u.a. von der Tatsache Gebrauch, daß beim übertritt einer oder mehrerer elektromagnetischen Wellen von einem ersten Medium, z.B. Luft, in ein zweites Medium, z.B. Muskelfleisch, Reflexionen bzw. Absorptionen auftreten, wobei diese Reflexionen bzw. Absorptionen unmittelbar abhängig sind von den elektromagnetischen Eigenschaften der beiden Medien.

Gemäß einer vorteilhaften Weiterbildung wird die Änderung des Strahlungsflusses dahingehend gewertet, ob sie mit der zu erwartenden Änderung entsprechend den elektromagnetischen Eigenschaften der zu identifizierenden Objekte und/oder Lebewesen übereinstimmt. Auf diese Weise lassen sich beispielsweise Objekte aus unterschiedlichen Materialien voneinander und insbesondere von Lebewesen unterscheiden. Bei der Erkennung von Lebewesen wird von der ebenfalls prinzipiell bekannten Tatsache Gebrauch gemacht, daß die elektromagnetischen Eigenschaften von biologischem Material, wie Muskelgewebe, Fettgewebe, Knochen usw., stark frequenzabhängig sind und sich erheblich von den elektromagnetischen Eigenschaften von nicht biologischem Material unterscheiden.

Zur Identifikation von Lebewesen werden die Frequenzen der Energiestrahlung so gewählt, daß sie in einem der drei Haupt-Dispersionsbereiche von Muskelgewebe liegen. In den Haupt-Dispersionsbereichen sind jeweils besondere Mechanismen für die elektromagnetischen Eigenschaften des Muskelgewebes verantwortlich, was zu ganz charakteristischen elektromagnetischen Eigenschaften führt, die dann die Unterscheidung ermöglichen.

Vorzugsweise erhält der Hintergrund, vor dem die zu identifizierenden Objekte und/oder Lebewesen mit dem Mikrowellen-Energiestrahl beleuchtet werden, Reflexionseigenschaften, die denen der Objekte und/oder Lebewesen möglichst komplementär sind. Auf diese Weise wird die Identifizierung stark erleichtert.

Liegen die elektromagnetischen Reflexionseigenschaften der zu identifizierenden Objekte und/oder Lebewesen bei einer bestimmten Frequenz zufällig in der Nähe derjeni- gen der Umgebung, so wird vorteilhafterweise die Mikrowellen-Energiestrahlung gewobbelt oder mehrere Energiestrahlen unterschiedlicher Frequenz ausgesendet. Dies ist möglich, da die elektromagnetischen Beflexionseigenschaften - wie oben erläutert - frequenzabhängig sind.

Anhand der Zeichnung soll die Erfindung in Form von Ausführungsbeisoielen näher erläutert werden.

Es zeigen:
Fig. 1 ein Blockschaltbild des Teils eines Abfragegerätes, der zur Zählung der von einem Mikrowellen-Energiestrahl erfaßten Objekte und/oder Lebewesen dient,
Fig. 2 die Frequenzabhängigkeit des spezifischen Widerstandes δ von Muskelgewebe,
Fig. 3 die Frequenzabhängigkeit der relativen Dielektrizitätszahl εᵣ von Muskelgewebe,
Fig. 4 die Freuqenzabhängiskeit der relativen Dielektrizitätszahl £ᵣ bzw. der spezifischen Leitfähigkeit σ von reinem Wasser und
Fig. 5 bis 7 eine schematisierte Darstellung des Ablaufs des Identifizierungsvorgangs im Bereich einer Kontrollzone.

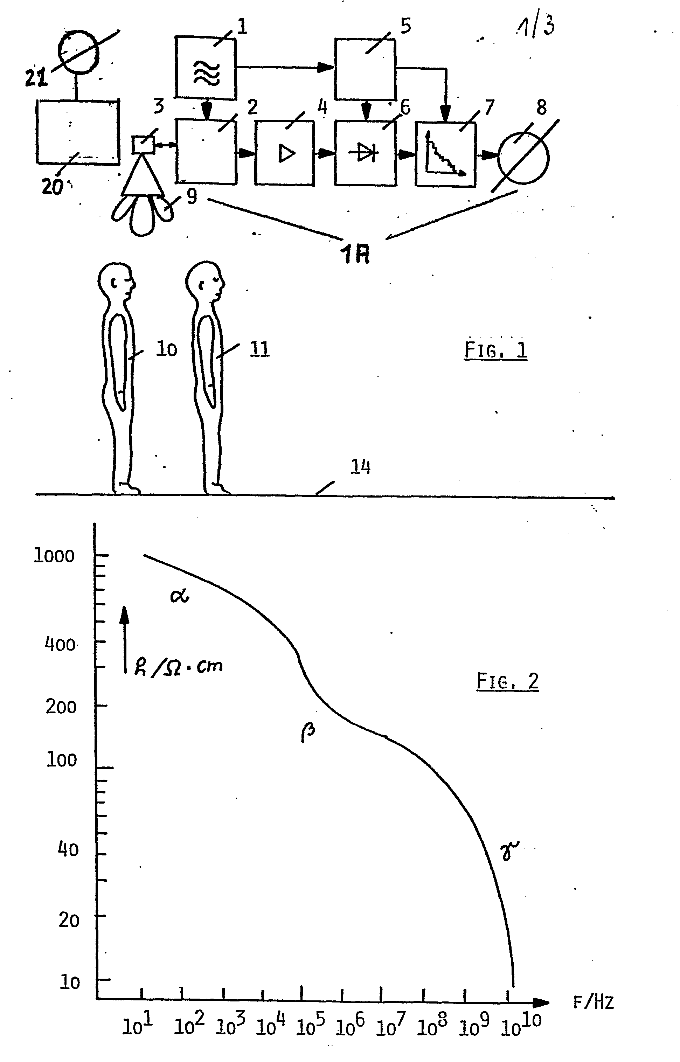

In Fig. 1 zeigt ein erstes Abfragegerät 1A mit einem Hochfrequenz-Generator 1, gegebenenfalls mit variabler Ausgangsfrequenz, der über einen Richtkoopler 2 eine Sende- und Empfangsantenne 3 speist. Die Antenne 3 ist als Hornstrahler dargestellt, um die bündelnde Eigenschaft zu symbolisieren.

Die Antenne 3 sendet einen gebündelten Energiestrahl.9 in Richtung auf die Personen 10, 11 aus. Ein Teil des - Energiestrahls 9 wird an der Oberfläche der Personen und des Erdbodens, der als Hintergrund 14 wirkt, reflektiert bzw. absorbiert. Ein Teil dringt in den Erdboden, in die Personen 10, 11 und in die (nicht dargestellten) Antwortgeräte, die die Personen 10, 11 mit sich tragen, ein.

Der reflektierte Anteil der elektromagnetischen Strahlung 9 gelangt zurück zu der Antenne 3. Von der Antenne 3 gelangt das Signal über den Richtkoppler 2 auf einen Verstärker 4 und von dort zu einem phasenempfindliehen Synchrongleichrichter 6. Vom Synchrongleichrichter 6 gelangt das demodulierte Signal auf ein Filter 7, welches auf.die charakteristischen Reflexionseigenschaften der Oberfläche der Personen 10,11 abgestimmt ist und von da auf eine Anzeigevorrichtung 12.

Ein Teil der vom Generator 1 erzeugten Hochfrequenzenergie wird über einen Abschwächer und Phasenschieber 5 sowohl auf den Synchrongleichrichter 6 als auch auf das Filter 7 gegeben, um die einwandfreie Funktion dieser beiden Komponenten zu gewährleisten.

Mit Hilfe eines zweiten Abfragegerätes 20, dessen Aufbau in der DE-OS 2Q 19 753 beschrieben ist, kann ermittelt werden, wie viele der sich augenblicklich in der Kontrollzone 14 befindenden Objekte und/oder Lebewesen mit einem gültigen Antwortgerät (hier nicht darestellt) ausgerüstet sind. Der Aufbau der Antwortgeräte ist ebenfalls in der DE-OS 29 19 753 beschrieben. An der Anzeige 21 kann die ermittelte Anzahl von Antwortgeräten (hier nicht dargestellt) abgelesen werden.

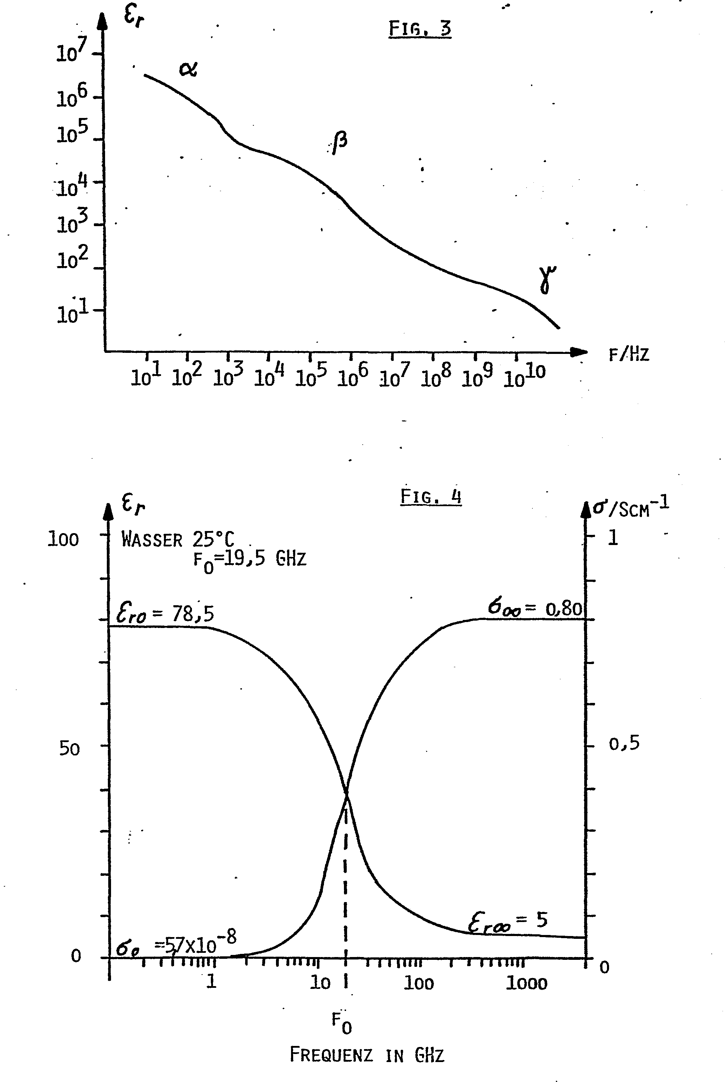

Fig. 2 zeigt die Frequenzabhängigkeit des spezifischen Widerstandes von Muskelgewebe, Fig. 3 die zugehörige Frequenzabhängigkeit der relativen Dielektrizitätszahl. Eingetragen sind die charakteristischen Häupt-Dispersionsbereiche α, ß, 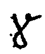 , in denen jeweils verschiedene Relaxationsmechanismen wirken, die für die gemessene Kurve charakteristisch sind.

Fig.4 zeigt die Frequenzabhängigkeit der relativen Dielektrizitätszahl Er und der spezifischen Leitfähigkeit δ für reines Wasser. Die Dielektrizitätszahl ist für Frequenzen unter etwa 1 GHz konstant gleich 78,5 und nimmt mit zunehmender Freouenz ab bis auf einen Wert von etwa 5. Ein annähernd reziprokes Verhalten zeigt die elektrische Leitfähigkeit 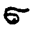 Dieses sogenannte Relaxationsverhalten von εᵣ und 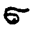 läßt sich mit der Kraftwirkung des elektromagnetischen Feldes auf das polare Wassermolekül erklären. Charakteristisch ist eine bestimmte Relaxationsfrequenz, die hier bei 19,5 GHz liegt. Bei dieser Frequenz liegt auch das Maximum der Absorption für elektromagnetische Strahlung. Bei sehr viel höheren Frequenzen treten weitere Disnersionsbereiche auf infolge von Atompolarisation und Elektronen_{D}ola- risation.

Die Kurven der Figuren 2, 3 und 4 sind entnommen aus der DE-Zeitschrift "PTB-Mitteilungen" 90, 6/1980, Seite 416 bis 433.

Den Fig 2 und 3 kann außerdem entnommen werden, wie weit die Frequenz des Generators 1 gewobbelt werden muß, wenn Lebewesen identifiziert werden sollen. Die Frequenzgrenzen müssen so weit auseinanderliegen, daß die sich aus der Frequenzabhängigkeit von snezifischer Leitfähigkeit und relativer Dielektrizitätszahl ergebenden charakteristischen Reflexionseigenschaften voll zur Wirkung kommen.

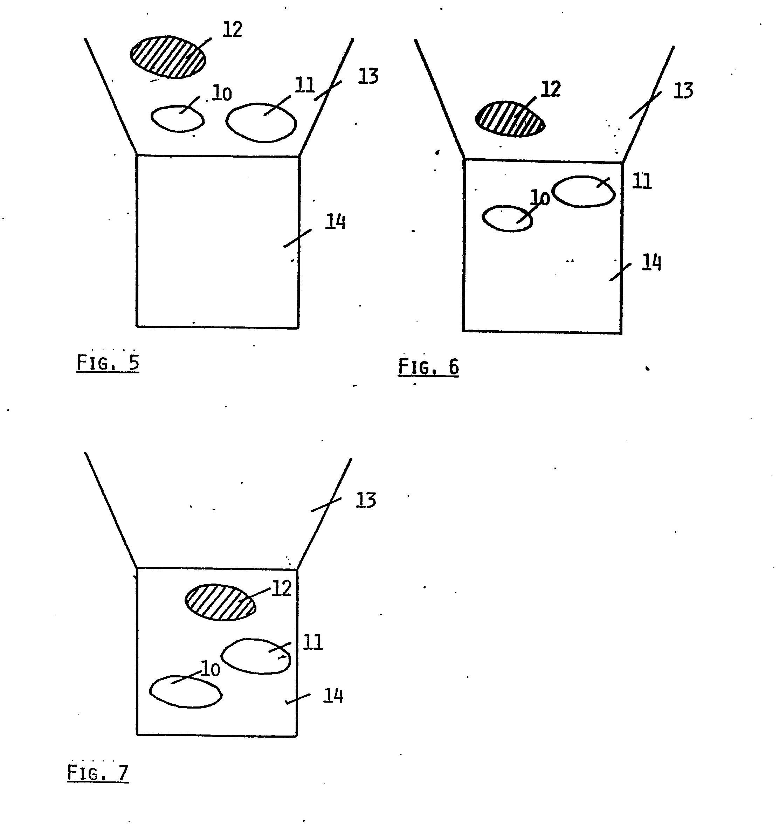

Anhand der Fig.5 "bis 7 soll der Zählvorgang erläutert werden. In Fig. 5 nähern sich drei Personen 10, 11, 12 auf einem Zugangsweg 13 einer Kontrollzone 14, die mit Mikrowellen ausgeleuchtet ist. Zwei Personen 10, 11 sind mit einem vorschriftsmäßigen Antwortgerät (hier nicht dargestellt) ausgerüstet, die dritte Person 12 nicht. Der Hintergrund der Kontrollzone 14 reflektiert entsprechend seiner elektromagnetischen Eigenschaften einen Teil der Mikrowellenenergie zurück zur Antenne, wo ein entsprechender Strahlungsfluß gemessen wird. In Fig. 6 treten die mit einem Antwortgerät ausgerüsteten Personen 10, 11 in die Kontrollzone 14 ein. Ihre Körper absorbieren infolge ihres hohen Wassergehaltes die Mikrowellen sehr stark. Jede Person reduziert daher den Strahlungsfluß der reflektierten Mikrowellenenergie. Bei zwei Personen wird eine zweimalige Reduzierung gemessen, insbesondere ist bei der Anwesenheit von zwei Personen in der Kontrollzone 14 die Änderungen der reflektierten Mikrowellenstrahlung mindestens doppelt so groß gegenüber dem Zustand, bei dem sich nur eine Person in der Kontrollzone 14 aufhält. Aus der Größe der Änderung kann nun die Anzahl der Personen ermittelt werden. Hierbei wird berücksichtigt, daß die Personen unterschiedliche Größen aufweisen, und damit geringfügige Differenzen in der Größe der Absorption und der Reflexion der Mikrowellenstrahlung bewirkt werden. Anhand von experimentell ermittelten Werten, kann festgestellt werden, wie groß die Abweichungen hierbei sind. Diese werden bei der Auswertung in Form von Korrekturfaktoren berücksichtigt. Gleichzeitig mit dieser Auswertung wird auch das ortsfeste Abfragegerät 20 betätigt. Mit seiner Hilfe wird ermittelt, welche der in der Kontrollzone 14 befindlichen Personen 10,11,12 mit einem gültigen Antwortgerät ausgestattet sind. Bei dem hier beschriebenen Beispiel ermittelt das ortsfeste Abfragegerät 2 Antwortgeräte. Da das Abfragegerät 1A aus der Änderung der Mikrowellenstrahlung zwei Personen ermittelt, besteht bereinstimmung zwischen der Zahl der Antwortgeräte und der Personen, so daß kein Alarm ausgelöst werden muß.

Bei der in Fig. 7 gezeigten Darstellung ist die Person 12, die mit keinem Antwortgerät ausgestattet ist, in die Kontrollzone 14 eingetreten. Sie verursacht eine weitere Verringerung des reflektierten Strahlungsflusses. Aus der Änderung des Strahlungsflusses wird mit Hilfe der in Fig. 1 dargestellten Schaltung die Anwesenheit von 3 Personen in der Köntrollzone 14 ermittelt. Das ortsfeste Abfragegerät 20 (hier nicht dargestellt) ermittelt jedoch nur die Anwesenheit von 2 Antwortgeräten (hier nicht dargestellt), sp daß das Kontrollsystem einen Alarm auslöst.

Sollen anstelle von Lebewesen beispielsweise metallische Objekte identifiziert und/oder gezählt werden, so steigt der Strahlungsfluß der reflektierten Mikrowellenenergie an, da Metallobjekte Mikrowellen sehr stark reflektieren. Auf diese Weise ist es beispielsweise möglich, Metallfässer, die auf einer Palette oder einem Förderband stehen, jedoch kein Antwortgerät besitzen, von fehlenden Fässern, die durch Lücken auf der Palette oder auf dem Förderband dargestellt sind, zu unterscheiden.

Es ist auf diese Weise auch möglich, Objekte aus unterschiedlichen Materialien, jedoch mit gleicher Größe, z.B. Holz- und Metallfässer (insbesondere stark verschmutzten), voneinander zu unterscheiden, was mit Hilfe von optischen Systemen nicht möglich wäre.

## Patentansprüche

1. Verfahren zum Erhöhender Sicherheit eines Zugangskontröllsystems, bei welchem die Berechtügung, ein bestimmtes Gebiet betreten zu dürfen, mit Hilfe einer Einrichtung zur automatischen Identifizierung von Objekten und/oder Lebewesen in der Art kontrolliert wird, daß von einem ortsfesten Abfragegerät (20) welches einen Energiesender, einen Codesender., einen Datenempfänger und eine Auswerteeinheit enthält, über einen Mikrowellen-Energiestrahl am zu kontrollierenden Objekt und/oder Lebewesen (10,11) befestigte Antwortgeräte, welche einen Energieempfänger und -wandler, einen Codeemofänger, einen Codevergleicher, einen Kennzeichenspeicher und einen Datensender enthalten, angesprochen werden, wobei die Datensender nach einer Überprüfung des vom Codesender kommenden Codes das im Kennzeichens_{D}eicher gespeicherte Kennzeichen aussenden, dadurch gekennzeichnet, daß die Änderung des Strahlungsflusses der von den Objekten und/oder Lebewesen (10,11) refelktierten bzw. absorbierten Mikrowellen-Energiestrahlung (9) erfaßt und aus-der Größe der Änderung die Zahl der diese Änderung des Strahlungsflusses verursachenden Objekte und/oder Lebewesen ermittelt wird, und daß diese Zahl mit der Zahl der vom ortsfesten Abfragegerät (20) identifizierten Antwortgeräte verglichen wird.

2. Verfahren nach Anspruch 1, dadurch gekennzeichnet, daß die Änderung des Strahlungsflusses dahingehend gewertet wird, ob sie mit der zu erwartenden Änderung entsprechend den elektromagnetischen Eigenschaften der zu identifizierenden Objekte und/oder Lebewesen (10,11) übereinstimmt.

3. Verfahren nach Anspruch 1 oder 2, dadurch gekennzeichnet, daß der Hintergrund der Kontrollzone (14), vor dem die zu identifizierenden Objekte und/oder Lebewesen (10,11,12) mit dem Mikrowellen-Energiestrahl (9) beleuchtet werden, Reflexionseigenschaften erhält, die denen der Objekte und/oder Lebewesen möglichst komplementär sind.

4. Verfahren nach Anspruch 1, 2 oder 3, dadurch gekennzeichnet, daß die Mikrowellen-EnergiestrahlunR (9) gewobbelt wird oder mehrere Energiestrahlen unterschiedlicher Frequenz ausgesendet werden.
